(19) Europäisches Patentamt
European Patent Office
Office européen des brevets

(11) **EP 3 404 825 B1**

(12) **EUROPÄISCHE PATENTSCHRIFT**

(45) Veröffentlichungstag und Bekanntmachung des Hinweises auf die Patenterteilung:
**20.10.2021  Patentblatt 2021/42**

(21) Anmeldenummer: **18163264.7**

(22) Anmeldetag: **22.03.2018**

(51) Int Cl.:
*H02P 21/14* *(2016.01)*          *H02P 21/16* *(2016.01)*
*H02P 21/00* *(2016.01)*

(54) **VERFAHREN ZUM BETREIBEN EINER ELEKTRISCHEN MASCHINE SOWIE ELEKTRISCHE MASCHINE**

ELECTRICAL MACHINE AND METHOD FOR OPERATING AN ELECTRICAL MACHINE

PROCÉDÉ DE FONCTIONNEMENT D'UNE MACHINE ÉLECTRIQUE AINSI QUE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2017  DE 102017208093**

(43) Veröffentlichungstag der Anmeldung:
**21.11.2018  Patentblatt 2018/47**

(73) Patentinhaber: **AUDI AG**
**85045 Ingolstadt (DE)**

(72) Erfinder: **Maiwald, Stefan**
**85055 Ingolstadt (DE)**

(56) Entgegenhaltungen:
**DE-A1-102012 224 162     DE-A1-102014 106 667**

**Beschreibung**

Die Erfindung betrifft ein Verfahren zum Betreiben einer elektrischen Maschine, wobei ein Wechselrichter der elektrischen Maschine mittels Pulsweitenmodulation angesteuert wird, wobei ein Tastverhältnis für die Pulsweitenmodulation aus einer solldrehzahlabhängigen Spannungsgröße sowie einer zeitabhängigen Winkelgröße ermittelt wird. Die Erfindung betrifft weiterhin eine elektrische Maschine.

Die elektrische Maschine kann grundsätzlich beliebig ausgestaltet sein und in einem beliebigen Gebiet zum Einsatz kommen. Besonders bevorzugt findet die elektrische Maschine im Kraftfahrzeugbereich Anwendung, insbesondere als Traktionsmaschine für ein Kraftfahrzeug. Die elektrische Maschine ist vorzugsweise als Synchronmaschine ausgebildet, insbesondere als Drehstrom-Synchronmaschine. Bevorzugt ist die elektrische Maschine permanenterregt. Auch eine elektrische Erregung kann jedoch realisiert sein. Beispielsweise liegt die elektrische Maschine als bürstenloser Gleichstrommotor vor, also als sogenannter BLDC-Motor.

Die elektrische Maschine ist mehrphasig aufgebaut, wobei der der elektrischen Maschine zugeordnete Wechselrichter zum Ansteuern der einzelnen Phasen der elektrischen Maschine vorgesehen ist. Der Wechselrichter verfügt über mehrere Stränge, nämlich bevorzugt über ebenso viele Stränge wie die elektrische Maschine Phasen aufweist. In jedem der Stränge ist wenigstens ein Schalter angeordnet, vorzugsweise sind jeweils mehrere Schalter realisiert. Beispielsweise sind in jedem der Stränge sowohl ein High-Side-Schalter als auch ein Low-Side-Schalter ausgebildet, wobei jede Phase der elektrischen Maschine jeweils zwischen dem High-Side-Schalter und dem Low-Side-Schalter an den entsprechenden Strang des Wechselrichters angeschlossen ist.

Jede Phase der elektrischen Maschine ist insoweit über den High-Side-Schalter des entsprechenden Strangs mit einem ersten elektrischen Potential und über den Low-Side-Schalter mit einem zweiten elektrischen Potential verbunden beziehungsweise verbindbar. Das bedeutet, dass bei geschlossenem High-Side-Schalter die entsprechende Phase der elektrischen Maschine mit dem ersten elektrischen Potential verbunden und bei geöffnetem High-Side-Schalter von ihm entkoppelt ist. Analog hierzu ist die entsprechende Phase der elektrischen Maschine bei geschlossenem Low-Side-Schalter mit dem zweiten elektrischen Potential verbunden und bei geöffnetem Low-Side-Schalter von ihm entkoppelt. Beispielsweise verfügt die elektrische Maschine über drei Phasen und entsprechend der Wechselrichter über drei Stränge, sodass in einer bevorzugten Ausgestaltung der Wechselrichter über drei High-Side-Schalter sowie drei Low-Side-Schalter verfügt.

Es ist vorgesehen, dass der Wechselrichter mittels Pulsweitenmodulation angesteuert wird. Hierbei wird ein Tastverhältnis ermittelt und an dem Wechselrichter eingestellt. Beispielsweise wird jeder der Schalter, also vorzugsweise jeder der High-Side-Schalter sowie jeder der Low-Side-Schalter, mit einem jeweiligen Tastverhältnis angesteuert. Beispielsweise wird für jeden der Stränge beziehungsweise jede der Phasen ein separates Tastverhältnis ermittelt. Es kann jedoch auch vorgesehen sein, dass lediglich ein einziges Tastverhältnis bestimmt und nachfolgend zum Ansteuern der Stränge beziehungsweise Phasen verwendet wird. Es sei darauf hingewiesen, dass auch bei dem Ermitteln mehrerer Tastverhältnisse diese selbst verständlich den gleichen Wert zumindest zeitweise annehmen können.

Es kann beispielsweise vorgesehen sein, die elektrische Maschine mittels einer feldorientierten Regelung beziehungsweise einer Vektorregelung anzusteuern beziehungsweise zu regeln. Die feldorientierte Regelung hat ein rotierendes Zeigersystem und besitzt als Eingangsgrößen die nicht rotierenden Ströme $I_d$ und $I_q$. Die physikalische Ansteuerung der elektrischen Maschine erfolgt aus einer Zwischenkreisspannung mittels Pulsweitenmodulation. Das Tastverhältnis der Pulsweitenmodulation wird mittels klassischer Regelschleifen aus einer Iststromstärke und einer Sollstromstärke gebildet. Weil die Stromstärke des elektrischen Stroms durch die elektrische Maschine proportional zu seinem Drehmoment ist, kann mittels der Pulsweitenmodulation bei gleichbleibender Sollstromstärke ein konstantes Drehmoment eingeregelt werden.

Wenn jedoch beispielsweise die elektrische Maschine auf eine Solldrehzahl eingestellt beziehungsweise eingeregelt werden soll, dann erfordert dies eine übergeordnete Regelschleife, woraus sich eine Kaskadenregelung ergibt. In anderen Worten wird zunächst eine Istdrehzahl der elektrischen Maschine auf eine Solldrehzahl geregelt, woraus sich ein Solldrehmoment beziehungsweise eine Sollstromstärke ergibt. Anschließend wird die Iststromstärke des durch die elektrische Maschine fließenden elektrischen Stroms auf die Sollstromstärke eingeregelt.

Aus dem Stand der Technik ist beispielsweise die Druckschrift DE 10 2014 106 667 A1 bekannt. Diese beschreibt repräsentative Implementationen von Vorrichtungen und Techniken, die eine optimierte Steuerung eines dreiphasigen WS-Motors vorsehen. Eine feldorientierte Steuerungs-(FOC-)Anordnung verwendet Optimierungskomponenten und -techniken zur Verbesserung der Leistungseffizienz des Motors mit einem schnellen Steuerungsverhalten über einen gesamten Bereich von Motorgeschwindigkeiten.

Es ist Aufgabe der Erfindung, ein Verfahren zum Betreiben einer elektrischen Maschine vorzuschlagen, welches gegenüber bekannten Verfahren Vorteile aufweist, insbesondere eine schnellere Reaktion auf eine Veränderung eines Sollwerts, beispielsweise der Solldrehzahl, ermöglicht.

Dies wird erfindungsgemäß mit dem Verfahren mit den Merkmalen des Anspruchs 1 erreicht. Das Verfahren zum Betreiben einer elektrischen Maschine sieht vor, dass ein Wechselrichter der elektrischen Maschine mittels Pulsweitenmodulation angesteuert wird, wobei ein Tastverhältnis für die Pulsweitenmodulation aus einer solldrehzahlabhängigen Spannungsgröße sowie einer zeitabhängigen Winkelgröße ermittelt wird,wobei als Spannungsgröße ein Verhältnis einer Sollspannung zu einer Zwischenkreisspannung verwendet wird, dadurch gekennzeichnet, dass die Winkelgröße aufsummiert wird, wobei als Summand ein Produkt aus Solldrehzahl und Zeitdifferenz verwendet wird und als zusätzlicher Summand eine Differenz zwischen einem ersten Winkel und einem zweiten Winkel verwendet wird, wobei der erste Winkel aus der Solldrehzahl und einer Feldschwächungsgröße ermittelt wird und der zweite Winkel dem vorherigen Wert des ersten Winkels entspricht oder aus gemessenen Phasenströmen durch den Wechselrichter ermittelt wird.

Grundsätzlich ist vorgesehen, dass ein Tastverhältnis für die Pulsweitenmodulation aus einer solldrehzahlabhängigen Spannungsgröße sowie einer zeitabhängigen Winkelgröße ermittelt wird

Das Verhältnis, mittels welchem der Wechselrichter der elektrischen Maschine angesteuert wird, wird insoweit nicht mittels Regelung bestimmt. Es ist insoweit keine klassische Regelschleife vorgesehen. Vielmehr wird das Tastverhältnis geometrisch berechnet. Es ergeben sich gesteuerte Werte und insgesamt das Verhalten eines Kompensationsreglers (Dead-Beat-Response). Dadurch reagiert die elektrische Maschine extrem schnell auf Änderungen des Sollwerts beziehungsweise eines korrespondierenden Istwerts der elektrischen Maschine. Im Gegensatz zu der vorstehend erläuterten feldorientierten Regelung liegt insoweit eine spannungsorientierte Regelung beziehungsweise Voltage-Oriented Control (VOC) vor.

Das Tastverhältnis wird einerseits aus der drehzahlabhängigen Spannungsgröße ermittelt. Weil die Drehzahl der elektrischen Maschine proportional zu der an ihr anliegenden effektiven Spannung ist, wird insoweit eine Drehzahlvorgabe gemacht. Dies ist beispielsweise im Falle der Traktionsmaschine vorteilhaft, weil beim Anfahren des Kraftfahrzeugs ein Schlupf schneller und präziser eingestellt werden kann, sodass insgesamt die Beschleunigung des Fahrzeugs aus geringen Geschwindigkeiten heraus, insbesondere aus dem Stillstand heraus, erhöht wird.

Zusätzlich zu der Spannungsgröße liegt dem Tastverhältnis die Winkelgröße zugrunde. Diese ist zeitabhängig, wird also in Abhängigkeit von der Zeit ermittelt. Bei dem Ermitteln des Tastverhältnisses dienen die Spannungsgröße und die Winkelgröße als Eingangsgrößen, wohingegen das Tastverhältnis sich als Ausgangsgröße ergibt. Beispielsweise ist es vorgesehen, einen Raumzeiger, welcher den Phasen der elektrischen Maschine zugeordnete Werte enthält, allein aus der Spannungsgröße und der Winkelgröße zu ermitteln. Beispielsweise ergeben sich die Komponenten des Raumzeigers für eine dreiphasige elektrische Maschine aus den folgenden Beziehungen:

$$d_U = d \cdot \sin(\alpha)$$

$$d_V = d \cdot \sin(\alpha + \pi/3)$$

$$d_W = d \cdot \sin(\alpha + 2/3\pi).$$

Anhand des Raumzeigers mit den genannten Komponenten wird anschließend das Tastverhältnis bestimmt beziehungsweise die Pulsweitenmodulation des Wechselrichters durchgeführt. Die Spannungsgröße d ergibt sich hierbei beispielsweise aus der Beziehung

$$d = U_s/U_z,$$

wobei $U_s$ eine Sollspannung und $U_z$ eine Zwischenkreisspannung ist. Die Zwischenkreisspannung ist hierbei bevorzugt die Differenz zwischen dem ersten Potential und dem zweiten Potential, wie vorstehend erwähnt.

Im Rahmen einer weiteren Ausgestaltung der Erfindung ist vorgesehen, dass die Sollspannung aus wenigstens einer Maschinenkenngröße sowie einer Solldrehzahl ermittelt wird. Auf die Verwendung der Spannungsgröße in Form des Verhältnisses zwischen der Sollspannung und der Zwischenkreisspannung wurde bereits hingewiesen. Die Zwischenkreisspannung ist die Istspannung des Zwischenkreises beziehungsweise die Spannungsdifferenz zwischen dem ersten Potential und dem zweiten Potential. Die Sollspannung wird hingegen aus der wenigstens einen Maschinenkenngröße sowie der Solldrehzahl ermittelt.

Die Solldrehzahl kann variabel sein und von extern vorgegeben werden. Die Maschinenkenngröße betrifft hingegen die elektrische Maschine, ist also eine systeminterne Größe. Die Maschinenkenngröße ist vorzugsweise konstant beziehungsweise ändert sich lediglich langsam, beispielsweise in Abhängigkeit von einer Alterung der elektrischen Maschine und/oder des Wechselrichters. Die Maschinenkenngröße kann insoweit auch als Motorkonstante bezeichnet werden.

Im Rahmen einer weiteren Ausgestaltung der Erfindung kann vorgesehen sein, dass bei dem Ermitteln der Sollspannung zusätzlich die Feldschwächungsgröße berücksichtigt wird. Die Feldschwächungsgröße liegt beispielsweise in Form eines Winkels vor, insbesondere in Form des Winkels zwischen einer in der elektrischen Maschine induzierten Spannung und ihrer Ansteuerspannung, welche mittels des Wechselrichters an ihr angelegt wird. Die induzierte Spannung wird auch als Gegen-EMK bezeichnet, wobei EMK für elektromotorische Kraft steht. Beispielsweise ist der Feldschwächungswinkel der Differenzwinkel zwischen der Gegen-EMK multipliziert mit der Maschinenkenngröße beziehungsweise Motorkonstante einerseits und der Ansteuerspannung andererseits. Wird eine Feldschwächungsgröße von null gewählt, so ergibt sich mit einer Ansteuerspannung U die Kennlinie eines Kollektormotors. Mithilfe der Feldschwächungsgröße kann eine bestimmte Feldschwächung eingestellt werden.

Die Erfindung sieht vor, dass die Winkelgröße aufsummiert wird, wobei als Summand ein Produkt aus Solldrehzahl und Zeitdifferenz verwendet wird. Unter dem Aufsummieren ist zu verstehen, dass aus dem bisherigen Wert der Winkelgröße und dem Summand ein neuer Wert der Winkelgröße ermittelt wird. In anderen Worten ergibt sich der neue Wert der Winkelgröße aus dem bisherigen Wert der Winkelgröße zuzüglich des Summands. Unter dem Aufsummieren wird das tatsächliche Bilden einer Summe zwischen dem bisherigen Wert der Winkelgröße und dem Summand oder alternativ ein Aufintegrieren verstanden, also ein Aufsummieren mit infinitesimal kleiner Zeitdifferenz.

Der bei dem Aufsummieren herangezogene Summand ist das Produkt aus Solldrehzahl und Zeitdifferenz. Die Solldrehzahl ist, wie bereits vorstehend erläutert, ein vorgegebener Wert. Die Zeitdifferenz beschreibt hingegen die zeitliche Differenz zwischen einzelnen Steuerschritten des Verfahrens. Bei einem ersten Steuerschritt liegt die Winkelgröße mit ihrem bisherigen Wert und im nächsten Steuerschritt mit ihrem neuen Wert vor. Die Zeitdifferenz ist beispielsweise während des Betriebs der elektrischen Maschine konstant. Die Steuerschritte folgen also mit einer bestimmten Frequenz, nämlich der Steuerfrequenz, aufeinander. Beispielsweise entspricht die Steuerfrequenz der Frequenz der Pulsweitenmodulation, mittels welcher der Wechselrichter angesteuert wird. Als Steuerfrequenz wird beispielsweise eine Frequenz von 1 kHz bis 50 kHz verwendet, vorzugsweise eine Frequenz von mindestens 5 kHz, mindestens 10 kHz oder mindestens 20 kHz.

Die Erfindung sieht vor, dass bei dem Aufsummieren der Winkelgröße als zusätzlicher Summand eine Differenz zwischen einem ersten Winkel und einem zweiten Winkel verwendet wird, wobei der erste Winkel aus der Solldrehzahl und der Feldschwächungsgröße ermittelt wird und der zweite Winkel dem vorherigen Wert des ersten Winkels entspricht oder aus gemessenen Phasenströmen durch den Wechselrichter ermittelt wird. Beispielsweise wird der neue Wert der Winkelgröße $\alpha$ aus der folgenden Beziehung ermittelt:

$$\alpha = \alpha' + \omega_s \Delta t + \gamma - \gamma'.$$

Dabei bezeichnet $\alpha$ den neuen Wert der Winkelgröße, a' den bisherigen Wert der Winkelgröße, $\omega_s$ die Solldrehzahl, $\Delta t$ die Zeitdifferenz, $\gamma$ den ersten Winkel und $\gamma'$ den zweiten Winkel. Der erste Winkel wird bevorzugt aus der Solldrehzahl und der Feldschwächungsgröße berechnet, wobei beispielsweise die folgende Beziehung herangezogen wird:

$$\gamma = \text{atan} \left( (\omega_s L I_i + \omega c_s \cdot \sin \varphi) / (R I_i + L \cdot dI_i/dt + \omega_s c \cdot \cos \varphi) \right)$$

Dabei bezeichnet $\omega_s$ die Solldrehzahl, L die Induktivität der elektrischen Maschine, $I_i$ den Iststrom, $dI_i/dt$ eine zeitliche Ableitung des Iststroms, c die Motorkonstante und $\varphi$ die Feldschwächungsgröße beziehungsweise den Feldschwächungswinkel. Der zweite Winkel entspricht nun beispielsweise dem Wert des ersten Winkels in einem vorhergehenden Steuerschritt, insbesondere dem unmittelbar vorhergehenden Steuerschritt beziehungsweise dem letzten Steuerschritt.

Es kann jedoch auch vorgesehen sein, ihn aus gemessenen Werten zu ermitteln, beispielsweise aus gemessenen Phasenströmen durch den Wechselrichter. Hierbei werden die gemessenen Phasenströme bevorzugt mittels einer Clarke-Transformation in einen Realteil und einen Imaginärteil umgesetzt. Aus dem Realteil und dem Imaginärteil kann nun ein Winkel berechnet werden, wobei sich der zweite Winkel aus der Differenz zwischen der Winkelgröße und diesem Winkel ergibt.

Eine weitere Ausführungsform der Erfindung sieht vor, dass die Phasenströme mittels Clarke-Transformation in einen Realteil und einen Imaginärteil umgerechnet werden. Hierauf wurde vorstehend in Kürze bereits hingewiesen. Beispielsweise werden lediglich zwei der Phasenströme gemessen, insbesondere die Phasenströme $I_U$ und $I_V$. Aufgrund der Voraussetzung, dass zu jedem Zeitpunkt die Summe der Außenleiterströme gleich null ist, lassen sich der Realteil x und der Imaginärteil y aus der folgende Beziehung berechnen:

$$\begin{bmatrix} x \\ y \end{bmatrix} = \begin{bmatrix} 1 & 0 \\ 1/\sqrt{3} & 2/\sqrt{3} \end{bmatrix} \begin{bmatrix} I_U \\ I_V \end{bmatrix}$$

Die Iststromstärke des durch die elektrische Maschine fließenden elektrischen Stroms lässt sich nun aus der Beziehung

$$I_i = \sqrt{x^2 + y^2}$$

ermitteln, wohingegen der vorstehend bereits erwähnte Winkel β sich aus der Beziehung

$$\beta = \text{atan}(y/x)$$

ergibt. Aus dem Winkel β kann durch zeitliche Ableitung die Istdrehzahl $\omega_i$ der elektrischen Maschine ermittelt werden.
Eine bevorzugte weitere Ausführungsform der Erfindung sieht vor, dass als zweiter Winkel eine Differenz zwischen der Winkelgröße und einem aus dem Realteil und dem Imaginärteil ermittelten Winkel verwendet wird. Hierauf wurde vorstehend bereits hingewiesen. Der zweite Winkel wird insoweit mittels der Beziehung

$$\gamma' = \alpha - \beta$$

berechnet werden.
Eine weitere Ausführungsform der Erfindung sieht vor, dass aus dem Winkel durch zeitliches Ableiten eine Istdrehzahl berechnet wird, und/oder dass aus dem Realteil und dem Imaginärteil eine Iststromstärke und/oder ein Iststromstärkengradient ermittelt wird. Insoweit können aus den Phasenströmen unterschiedliche Größen, nämlich unterschiedliche Istgrößen, der elektrischen Maschine berechnet werden. Zum einen ergibt sich aus dem Winkel, welcher aus dem Realteil und dem Imaginärteil ermittelt wurde, durch zeitliches Ableiten die Istdrehzahl. Der Winkel wird hierbei bevorzugt anhand der Beziehung

$$\beta = \text{atan}(y/x)$$

ermittelt. Die Iststromstärke ergibt sich hingegen aus der Beziehung

$$I_i = \sqrt{x^2 + y^2}$$

Durch Ableitung der Iststromstärke kann zudem der Iststromstärkengradient $dI_i/dt$ berechnet werden.
Schließlich kann im Rahmen einer bevorzugten weiteren Ausführungsform der Erfindung vorgesehen sein, dass während eines Kalibrierbetriebs der elektrischen Maschine wenigstens eine maschinenspezifische Maschengrö-ße ermittelt wird. Der Kalibrierbetrieb wird bevorzugt zumindest während eines Erststarts der elektrischen Maschine durchgeführt, besonders bevorzugt jedoch regelmäßig während des Betriebs der elektrischen Maschine. Im Rahmen des Kalibrierbetriebs wird die wenigstens eine maschinenspezifische Maschengröße ermittelt, beispielsweise die Maschinenkenngröße, insbesondere die Motorkonstante, die mit dem Formelzeichen c bezeichnet werden kann. Es kann jedoch auch vorgesehen sein, dass als Maschengröße die Induktivität oder ein Widerstand von Motorwicklungen der elektrischen Maschine herangezogen wird. Weil sich der Widerstand mit der Temperatur der elektrischen Maschine beziehungsweise der Wicklung verändert, kann aus dem Widerstand die Wicklungstemperatur abgeleitet werden.
Die Erfindung betrifft weiterhin eine elektrische Maschine, insbesondere zur Durchführung des Verfahrens nach einem oder mehreren der vorhergehende Ansprüche, wobei ein Wechselrichter der elektrischen Maschine mittels Pulsweitenmodulation ansteuerbar ist, wobei die elektrische Maschine dazu ausgebildet ist, ein Tastverhältnis für die Pulsweitenmodulation aus einer solldrehzahlabhängigen Spannungsgröße sowie einer zeitabhängigen Winkelgröße zu ermitteln, wobei als Spannungsgröße ein Verhältnis einer Sollspannung zu einer Zwischenkreisspannung verwendet wird, dadurch gekennzeichnet, dass die Winkelgröße aufsummiert wird, wobei als Summand ein Produkt aus Solldrehzahl und Zeitdifferenz verwendet wird und als zusätzlicher Summand eine Differenz zwischen einem ersten Winkel und einem zweiten Winkel verwendet wird, wobei der erste Winkel aus der Solldrehzahl und einer Feldschwächungsgröße ermittelt wird und der zweite Winkel dem vorherigen Wert des ersten Winkels entspricht oder aus gemessenen Phasenströmen durch den Wechselrichter ermittelt wird.

Auf die Vorteile einer derartigen Vorgehensweise beziehungsweise einer derartigen Ausgestaltung der elektrischen Maschine wurde bereits hingewiesen. Sowohl die elektrische Maschine als auch das Verfahren zu ihrem Betreiben können gemäß den vorstehenden Ausführungen weitergebildet sein, sodass insoweit auf diese verwiesen wird.

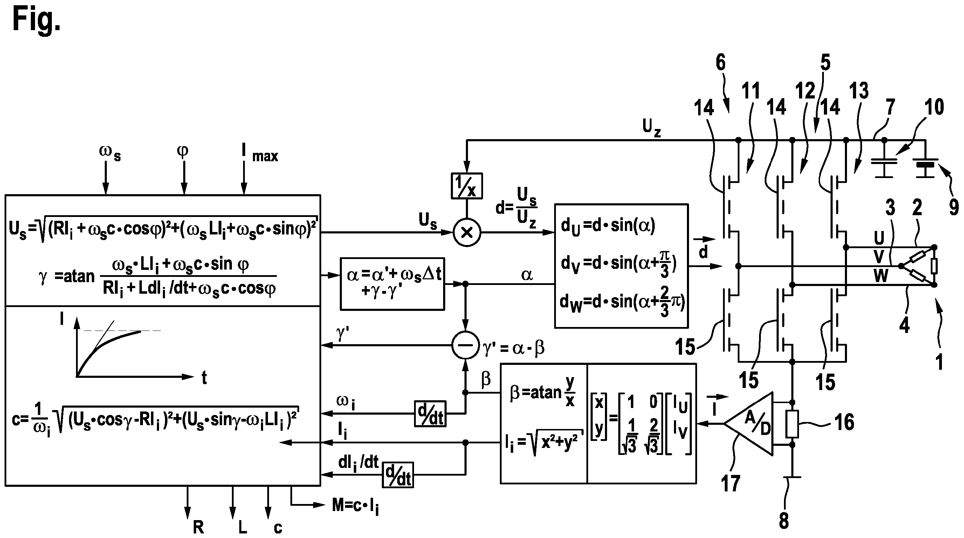

Die Erfindung wird nachfolgend anhand der in der Zeichnung dargestellten Ausführungsbeispiele näher erläutert, ohne dass eine Beschränkung der Erfindung erfolgt. Dabei zeigt die einzige

Figur    eine schematische Darstellung eines Betriebsverfahrens für eine elektrische Maschine.

Die Figur zeigt eine schematische Darstellung eines Betriebsverfahrens für eine elektrische Maschine 1, welche hier rein beispielhaft dreiphasig ausgestaltet ist und insoweit drei Phasen 2, 3 und 4, auch bezeichnet als U, V und W, aufweist. Die elektrische Maschine wird mittels eines Wechselrichters 5 angesteuert, über welchen die elektrische Maschine 1 mit einem Zwischenkreis 6 elektrisch verbindbar ist. Der Zwischenkreis 6 weist ein erstes elektrisches Potential 7 und ein zweites elektrisches Potential 8 auf. Zur Bereitstellung des ersten Potentials 7 kann beispielsweise eine hier lediglich angedeutete Spannungsquelle 9 vorgesehen sein. Zudem ist dem Zwischenkreis 6 zur Spannungsstabilisierung optional ein Pufferspeicher 10, beispielsweise ein Kondensator zugeordnet beziehungsweise an ihn angeschlossen.

Der Wechselrichter 5 verfügt über eine Anzahl der Phasen 2, 3 und 4 der elektrischen Maschine 1 entsprechenden Anzahl an Stränge 11, 12 und 13.

Jeder der Stränge 11, 12 und 13 verfügt jeweils über einen High-Side-Schalter 14 sowie einen Low-Side-Schalter 15. Die High-Side-Schalter 14 sind jeweils einerseits an das erste Potential 7 und andererseits an eine der Phasen 2, 3 beziehungsweise 4 der elektrischen Maschine 1 angeschlossen. Die Low-Side-Schalter 15 sind hingegen einerseits an eine der Phasen 2, 3 beziehungsweise 4 der elektrischen Maschine 1 und andererseits an das zweite Potential 8 angeschlossen. Letzteres kann über einen Shunt 16 realisiert sein, mittels welchem Phasenströme durch die Phasen 2, 3 und 4 der elektrischen Maschine 1 gemessen werden können.

Eine Ansteuerung des Wechselrichters 5 zum Betreiben der elektrischen Maschine 1 erfolgt mittels Pulsweitenmodulation. Hierbei wird ein Raumzeiger mit den Komponenten du, dv und dw ermittelt, welche den einzelnen Phasen 2, 3 und 4 der elektrischen Maschine 1 zugeordnet sind. Jede der Komponenten berechnet sich aus einer solldrehzahlabhängigen Spannungsgröße d und einer zeitabhängigen Winkelgröße a. Die zur Berechnung verwendeten Beziehungen lauten:

$$d_U = d \cdot \sin(\alpha)$$

$$d_V = d \cdot \sin(\alpha + \pi/3)$$

$$d_W = d \cdot \sin(\alpha + 2/3\pi).$$

Die Spannungsgröße d ergibt sich hierbei aus einem Verhältnis zwischen einer Sollspannung $U_s$ und einer Zwischenkreisspannung Uz des Zwischenkreises.

Die zeitabhängige Winkelgröße $\alpha$ ergibt sich durch Aufsummieren. Als Eingangsgröße dient insoweit der bisherige Wert $\alpha'$ der Winkelgröße, die Solldrehzahl $\omega_s$ sowie eine Zeitdifferenz $\Delta t$ zwischen einzelnen Steuerschritten. Weiterhin werden ein erster Winkel $\gamma$ und ein zweiter Winkel $\gamma'$ berücksichtigt.

Der erste Winkel $\gamma$ wird aus der Solldrehzahl $\omega_s$ und einer Feldschwächungsgröße $\varphi$ berechnet, beispielsweise anhand der Beziehung

$$\gamma = \mathrm{atan}\left((\omega_s L I_i + \omega_s c \cdot \sin\varphi) / (R I_i + L \cdot dI_i/dt + \omega_s c \cdot \cos\varphi)\right)$$

Der zweite Winkel nimmt hingegen den Wert des ersten Winkels aus dem letzten Steuerschritt an. Nach dem Aufsummieren wird die Winkelgröße $\alpha$ gleich dem Ergebnis des Aufsummierens gesetzt.

Die Spannungsgröße $U_s$ wird aus wenigstens einer Maschinenkenngröße sowie der Solldrehzahl $\omega_s$ bestimmt. Beispielsweise wird die Sollspannung $U_s$ aus der Beziehung

$$U_s = \sqrt{(RI_i + \omega_s c \cdot \cos\varphi)^2 + (\omega_s L I_i + \omega_s c \cdot \sin\varphi)^2}$$

ermittelt, wobei R ein Wicklungswiderstand der elektrischen Maschine und I ein elektrischer Strom, insbesondere eine maximale elektrische Stromstärke Imax, ist.

Vorstehend wurde bereits erläutert, dass der Shunt 16 zur Messung von Phasenströmen vorgesehen ist. Die gemessenen Stromstärken werden beispielsweise mittels eines Analog-Digital-Wandlers 17 digitalisiert und anschließend mittels einer Clarke-Transformation in einen Realteil x und einen Imaginärteil y umgesetzt, beispielsweise mittels der Beziehung

$$\begin{bmatrix} x \\ y \end{bmatrix} = \begin{bmatrix} 1 & 0 \\ 1/\sqrt{3} & 2/\sqrt{3} \end{bmatrix} \begin{bmatrix} I_U \\ I_V \end{bmatrix}$$

ermittelt.

Aus dem Realteil x und dem Imaginärteil y kann nun ein Winkel $\beta$ berechnet werden. Durch Ableitung dieses Winkels $\beta$ kann die Istdrehzahl $\omega_i$ ermittelt werden. Weiterhin können die Iststromstärke $I_i$ sowie der Iststromstärkengradient durch zeitliches Ableiten der Iststromstärke $I_i$ berechnet werden. Aus der Differenz zwischen der zeitabhängigen Winkelgröße $\alpha$ und dem Winkel $\beta$ ergibt sich ein Istwert des Winkels $\gamma$. Dieser kann als zweiter Winkel $\gamma'$ bei dem Aufsummieren der Winkelgröße herangezogen werden. Zusätzlich oder alternativ wird der Istwert des Winkels $\gamma$ während eines Kalibrierbetriebs der elektrischen Maschine 1 verwendet.

Während des Kalibrierbetriebs wird wenigstens eine maschinenspezifische Maschinengröße ermittelt. Als Maschinengröße kann beispielsweise der Wicklungswiderstand herangezogen werden, welcher aus der Sollspannung $U_s$ sowie einer Stromstärke $I_0$ ermittelt werden kann, wobei die Stromstärke $I_0$ beispielsweise eine während des Betriebs der elektrischen Maschine maximal auftretende Stromstärke ist. Die Induktivität L kann beispielsweise aus der Beziehung $L = R_T$ berechnet werden, wobei $\tau$ die Zeitkonstante der elektrischen Maschine ist, welche sich im Umkehrschluss aus der Beziehung

$$\tau = L/R$$

ergibt. Als weitere Maschinenkenngröße kann die Motorkonstante c verwendet werden, welche beispielsweise aus der Beziehung

$$c = \frac{1}{\omega_i} \sqrt{(U_s \cdot \cos\gamma - RI_i)^2 + (U_s \cdot \sin\gamma - \omega_i L I_i)^2}$$

berechnet wird. Schlussendlich ist es mithilfe der Motorkonstante c möglich, das Istdrehmoment $M_{ist}$ der elektrischen Maschine 1 zu berechnen, nämlich anhand der Beziehung

$$M_i = cI_i,$$

unter Verwendung der Iststromstärke $I_i$.

Mit der beschriebenen Vorgehensweise ist eine spannungsorientierte Regelung der elektrischen Maschine 1 realisiert, welche sensorlos erfolgen kann. Das bedeutet, dass zum Betreiben der elektrischen Maschine 1 lediglich eine Messung des Stroms mittels des Shunts 16 erfolgt. Selbstverständlich kann zusätzlich oder alternativ ein Drehzahlsensor zur Messung der Drehzahl $\omega_i$ herangezogen werden, dies ist jedoch nicht Teil der Erfindung. Es ist auch möglich, die beschriebene spannungsorientierte Regelung mit anderen Verfahren zu kombinieren und/oder in einem ersten Drehzahlbereich die Messung des Iststroms mittels des Shunts 16 heranzuziehen und in einem anderen Drehzahlbereich die Istdrehzahl $\omega_i$ der elektrischen Maschine 1 mittels eines Sensors direkt zu messen, auch dies ist nicht Teil der Erfindung.

**Patentansprüche**

1.  Verfahren zum Betreiben einer elektrischen Maschine (1), wobei ein Wechselrichter (5) der elektrischen Maschine (1) mittels Pulsweitenmodulation angesteuert wird, wobei ein Tastverhältnis für die Pulsweitenmodulation aus einer solldrehzahlabhängigen Spannungsgröße (d) sowie einer zeitabhängigen Winkelgröße ($\alpha$) ermittelt wird, wobei als Spannungsgröße (d) ein Verhältnis einer Sollspannung ($U_s$) zu einer Zwischenkreisspannung (Uz) verwendet wird, **dadurch gekennzeichnet, dass** die Winkelgröße ($\alpha$) aufsummiert wird, wobei als Summand ein Produkt aus Solldrehzahl ($\omega_s$) und Zeitdifferenz ($\Delta t$) verwendet wird und als zusätzlicher Summand eine Differenz zwischen einem ersten Winkel ($\gamma$) und einem zweiten Winkel ($\gamma'$) verwendet wird, wobei der erste Winkel ($\gamma$) aus der Solldrehzahl ($\omega_s$) und einer Feldschwächungsgröße ($\varphi$) ermittelt wird und der zweite Winkel ($\gamma'$) dem vorherigen Wert des ersten Winkels ($\gamma$) entspricht oder aus gemessenen Phasenströmen (lu,lv) durch den Wechselrichter (5) ermittelt wird.

2.  Verfahren nach Anspruch 1, **dadurch gekennzeichnet, dass** die Sollspannung ($U_s$) aus wenigstens einer Maschinenkenngröße (c) sowie einer Solldrehzahl ($\omega_s$) ermittelt wird.

3.  Verfahren nach einem der vorhergehenden Ansprüche, **dadurch gekennzeichnet, dass** bei dem Ermitteln der Sollspannung ($U_s$) zusätzlich die Feldschwächungsgröße ($\varphi$) berücksichtigt wird.

4.  Verfahren nach einem der vorhergehenden Ansprüche, **dadurch gekennzeichnet, dass** die Phasenströme (lu,lv) mittels Clarke-Transformation in einen Realteil (x) und einen Imaginärteil (y) umgerechnet werden.

5.  Verfahren nach einem der vorhergehenden Ansprüche, **dadurch gekennzeichnet, dass** als zweiter Winkel ($\gamma'$) eine Differenz zwischen der Winkelgröße ($\alpha$) und einem aus dem Realteil (x) und dem Imaginärteil (y) ermittelten Winkel ($\beta$) verwendet wird.

6.  Verfahren nach einem der vorhergehenden Ansprüche, **dadurch gekennzeichnet, dass** aus dem Winkel ($\beta$) durch zeitliches Ableiten eine Istdrehzahl ($\omega_i$) berechnet wird, und/oder dass aus dem Realteil (x) und dem Imaginärteil (y) eine Iststromstärke ($I_i$) und/oder ein Iststromstärkengradient ($dI_i/dt$) ermittelt wird.

7.  Verfahren nach einem der vorhergehenden Ansprüche, **dadurch gekennzeichnet, dass** während eines Kalibrierbetriebs der elektrischen Maschine (1) wenigstens eine maschinenspezifische Maschinengröße (c,R,L) ermittelt wird.

8.  Elektrische Maschine (1), insbesondere zur Durchführung des Verfahrens nach einem oder mehreren der vorhergehende Ansprüche, wobei ein Wechselrichter (5) der elektrischen Maschine (1) mittels Pulsweitenmodulation ansteuerbar ist, wobei die elektrische Maschine (1) dazu ausgebildet ist, ein Tastverhältnis für die Pulsweitenmodulation aus einer solldrehzahlabhängigen Spannungsgröße (d) sowie einer zeitabhängigen Winkelgröße ($\alpha$) zu ermitteln, wobei als Spannungsgröße (d) ein Verhältnis einer Sollspannung ($U_s$) zu einer Zwischenkreisspannung (Uz) verwendet wird, **dadurch gekennzeichnet, dass** die Winkelgröße ($\alpha$) aufsummiert wird, wobei als Summand ein Produkt aus Solldrehzahl ($\omega_s$) und Zeitdifferenz ($\Delta t$) verwendet wird und als zusätzlicher Summand eine Differenz zwischen einem ersten Winkel ($\gamma$) und einem zweiten Winkel ($\gamma'$) verwendet wird, wobei der erste Winkel ($\gamma$) aus der Solldrehzahl ($\omega_s$) und einer Feldschwächungsgröße ($\varphi$) ermittelt wird und der zweite Winkel ($\gamma'$) dem vorherigen Wert des ersten Winkels ($\gamma$) entspricht oder aus gemessenen Phasenströmen (lu,lv) durch den Wechselrichter (5) ermittelt wird.

**Claims**

1.  Method for operating an electric machine (1), wherein an inverter (5) of the electrical machine (1) is actuated by means of pulse width modulation, wherein a pulse duty factor for the pulse width modulation is determined from a voltage value (d) that is dependent on the desired rotational speed as well as a time-dependent angle value ($\alpha$), wherein a ratio of a desired voltage ($U_s$) to an intermediate circuit voltage ($U_Z$) is used as the voltage value (d), **characterised in that** the angle value ($\alpha$) is added up, wherein a product of the desired rotational speed ($\omega_s$) and a time difference ($\Delta t$) is used as summand and a difference between a first angle ($\gamma$) and a second angle (y') is used as an additional summand, wherein the first angle ($\gamma$) is determined from the desired rotational speed ($\omega_s$) and a field attenuation value ($\varphi$) and the second angle (y') corresponds to the previous value of the first angle ($\gamma$) or is determined from measured phase currents ($I_U$, $I_V$) through the inverter (5).

2. Method according to claim 1, **characterised in that** the desired voltage ($U_s$) is determined from at least one characteristic value (c) of the machine as well as the desired rotational speed ($\omega_s$).

3. Method according to any one of the preceding claims, **characterised in that,** in the determination of the desired voltage ($U_S$), the field attenuation value ($\varphi$) is additionally taken into account.

4. Method according to any one of the preceding claims, **characterised in that** the phase currents ($I_U$, $I_V$) are converted by means of a Clarke Transformation into a real part (x) and an imaginary part (y).

5. Method according to any one of the preceding claims, **characterised in that** a difference between the angle value ($\alpha$) and an angle ($\beta$) determined from the real part (x) and the imaginary part (y) is used as the second angle (y').

6. Method according to any one of the preceding claims, **characterised in that** an actual rotational speed ($\omega_i$) is calculated from the angle ($\beta$) by differentiation with respect to time, and/or **in that** an actual current intensity ($I_i$) and/or an actual current intensity gradient ($dI_i/dt$) is determined from the real part (x) and the imaginary part (y).

7. Method according to any one of the preceding claims, **characterised in that,** during a calibration operation of the machine (1), at least one machine-specific machine value (c, R, L) is determined.

8. Electrical machine (1), in particular for carrying out the method of one or more of the preceding claims, wherein an inverter (5) of the electrical machine (1) can be actuated by means of pulse width modulation, wherein the electrical machine (1) is adapted to determine a pulse duty factor for the pulse width modulation from a voltage value (d) that is dependent on a desired rotational speed as well as a time-dependent angle value ($\alpha$), wherein a ratio of a desired voltage ($U_s$) to an intermediate circuit voltage (Uz) is used as the voltage value (d), **characterised in that** the angle value ($\alpha$) is added up, wherein a product of the desired rotational speed ($\omega_s$) and a time difference ($\Delta t$) is used as summand and a difference between a first angle ($\gamma$) and a second angle (y') is used as an additional summand, wherein the first angle (y) is determined from the desired rotational speed ($\omega_s$) and a field attenuation value ($\varphi$) and the second angle (y') corresponds to the previous value of the first angle ($\gamma$) or is determined from measured phase currents ($I_U$, $I_V$) through the inverter (5).

**Revendications**

1. Procédé de fonctionnement d'une machine électrique (1), dans lequel un onduleur (5) de la machine électrique (1) est commandé au moyen d'une modulation de largeur d'impulsion, dans lequel un rapport d'impulsions pour la modulation de largeur d'impulsion est déterminé à partir d'une grandeur de tension (d) dépendant du régime de consigne ainsi que d'une grandeur angulaire ($\alpha$) dépendant du temps, dans lequel un rapport entre une tension de consigne ($U_s$) et une tension de circuit intermédiaire ($U_z$) est utilisé en tant que grandeur de tension (d), **caractérisé en ce que** la grandeur angulaire ($\alpha$) est additionnée, dans lequel un produit d'un régime de consigne ($\omega_s$) et d'une différence de temps ($\Delta t$) est utilisé en tant que somme et une différence entre un premier angle ($\gamma$) et un second angle (y') est utilisée en tant que somme supplémentaire, dans lequel le premier angle ($\gamma$) est déterminé à partir du régime de consigne ($\omega_s$) et d'une grandeur d'affaiblissement de champ ($\varphi$) et le second angle (y') correspond à la valeur précédente du premier angle ($\gamma$) ou est déterminé à partir de courants de phase mesurés (lu, lv) à travers l'onduleur (5).

2. Procédé selon la revendication 1, **caractérisé en ce que** la tension de consigne ($U_s$) est déterminée à partir d'au moins une grandeur caractéristique de machine (c) ainsi que d'un régime de consigne ($\omega_s$).

3. Procédé selon l'une quelconque des revendications précédentes, **caractérisé en ce que** la grandeur d'affaiblissement du champ ($\varphi$) est en outre prise en compte lors de la détermination de la tension de consigne ($U_s$).

4. Procédé selon l'une quelconque des revendications précédentes, **caractérisé en ce que** les courants de phase ($I_U$, $I_V$) sont convertis en une partie réelle (x) et une partie imaginaire (y) au moyen d'une transformée de Clarke.

5. Procédé selon l'une quelconque des revendications précédentes, **caractérisé en ce qu'**une différence entre la grandeur angulaire ($\alpha$) et un angle ($\beta$) déterminé à partir de la partie réelle (x) et de la partie imaginaire (y) est utilisée comme en tant que second angle (y').

6. Procédé selon l'une quelconque des revendications précédentes, **caractérisé en ce qu'**un régime réel ($\omega_i$) est calculé à partir de l'angle ($\beta$) par dérivation temporelle et/ou **en ce qu'**une intensité de courant réelle ($I_i$) et/ou un gradient d'intensité de courant réelle ($dI_i/dt$) est déterminé à partir de la partie réelle (x) et de la partie imaginaire (y).

7. Procédé selon l'une quelconque des revendications précédentes, **caractérisé en ce qu'**au moins une grandeur de machine (c, R, L) spécifique à la machine est déterminée lors d'une opération de calibrage de la machine électrique (1).

8. Machine électrique (1), en particulier pour la mise en œuvre du procédé selon une ou plusieurs des revendications précédentes, dans laquelle un onduleur (5) de la machine électrique (1) peut être commandé au moyen d'une modulation de largeur d'impulsion, dans laquelle la machine électrique (1) est conçue pour déterminer un rapport d'impulsions pour la modulation de largeur d'impulsion à partir d'une grandeur de tension (d) dépendant du régime de consigne ainsi que d'une grandeur angulaire ($\alpha$) dépendant du temps, dans laquelle un rapport entre une tension de consigne ($U_s$) et une tension de circuit intermédiaire ($U_z$) est utilisé en tant que grandeur de tension (d), **caractérisée en ce que** la grandeur angulaire ($\alpha$) est additionnée, dans laquelle un produit d'un régime de consigne ($\omega_s$) et d'une différence de temps ($\Delta t$) est utilisé en tant que somme et une différence entre un premier angle ($\gamma$) et un second angle (y') est utilisée en tant que somme supplémentaire, dans laquelle le premier angle ($\gamma$) est déterminé à partir du régime de consigne ($\omega_s$) et d'une grandeur d'affaiblissement de champ ($\varphi$) et le second angle (y') correspond à la valeur précédente du premier angle ($\gamma$) ou est déterminé à partir de courants de phase mesurés ($I_U$, $I_V$) à travers l'onduleur (5).

**Fig.**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014106667 A1